# EUROPEAN PATENT SPECIFICATION

(11) **EP 2 207 375 B1**
(45) Date of publication and mention of the grant of the patent: **05.01.2011**
(21) Application number: 09305020.1
(22) Date of filing: 09.01.2009
(51) Int. Cl.: H04W 16/04

(54) **A method for distribution of resources from a pool of resources to cells or sectors of a communication network, a central device and a communication network therefor**
Verfahren zur Verteilung von Ressourcen aus einer Ressourcensammlung an Zellen oder Abschnitte eines Kommunikationsnetzwerks, zentrale Vorrichtung und Kommunikationsnetzwerk dafür
Procédé de distribution de ressources d'un ensemble de ressources vers des cellules ou des secteurs d'un réseau de communication, dispositif central et réseau de communication correspondant

(43) Date of publication of application: 14.07.2010
(73) Proprietor: Alcatel Lucent, 75008 Paris (FR)
(72) Inventor: Karla, Ingo, 46514, Schermbeck (DE); Bakker, Hajo-Erich, 71735, Eberdingen (DE)
(74) Representative: Kleinbub, Oliver

(56) References cited:
- EP-A- 0 731 622
- WO-A-99/53705
- WO-A-02/091774
- US-A1- 2003 013 451

## Description

The invention relates to a method for distribution of resources from a pool of resources to cells or sectors of a communication network according to the preamble of claim 1, a central device according to the preamble of claim 11 and a communication network according to the preamble of claim 13.

Mobile cellular networks, like Third Generation Partnership Project Long Term Evolution (3GPP LTE), are required to provide a large degree of self-organizing, self-configuration and self-optimization functionalities. Such functionalities are e.g. the so-called self organizing network (SON) use cases defined by 3GPP LTE.

One of these self organizing network requirements applies to self-organizing inter-cell interference coordination (ICIC).

Orthogonal transmission schemes such as Orthogonal Frequency Division Multiplexing (OFDM), single carrier Frequency Division Multiple Access (FDMA) or distributed FDMA such as interleaved FDMA with multiple terminals will become increasingly important e.g. for future evolutions of air interfaces for mobile radio systems. Those radio systems are currently under discussion e.g. in Third Generation Partnership Project Long Term Evolution (LTE), for Wireless Local Area Networks (WLANs) e.g. according to standard IEEE 802.11a, or for a 4^{th} generation air interface.

Given the licensed bandwidth, transmission capacity from network providers e.g. for picture uploading or video communication has to be as high as possible for all users to serve as many subscribers as possible. Further the quality of service experienced by the user and especially the coverage of the service is an important property demanded by the user. So, an access scheme shall work well at the cell borders of a frequency reuse network. For that reason, interference coordination schemes are based on a distribution of resources across cells in a kind of network planning. This distribution of resources comprises the distribution of restrictions of the transmission power in the cells on restricted frequency subsets of the group of frequency subsets the frequency band is divided into.

In downlink, interference coordination works in such a way that the power restriction on frequency subsets in a cell leads to a preference for the usage of said frequency subsets by user terminals that are served by an adjacent cell.

In a multi-cell area the restrictions should be distributed in such a way, that in the region between two cells in a network with frequency reuse of about 1 whenever possible different restriction settings meet and in the whole border region as much as possible of the spectrum can be used and the data throughput is thus maximized.

So the goal of the distribution of restrictions is that neighboring cells or sectors have different restrictions and the corresponding possible preferences, as e.g. the preferably used subsets, for mobile terminals in the border region possibly leaving the cell are distributed across different parts of the border region.

This distribution of restrictions has to be reconsidered or revised if a new cell is added to an existing network, if an existing cell is removed, if the neighbour relations between the cells change, or if the interference situation changes in and/or around the area of these cells

In practice, networks have to be adapted to a real geography and limited availability of geographic locations where base stations can be placed. So the base station pattern will not be regular anymore. Thus a network planning for the restrictions or preferences has to be done for such real and irregularly positioned base stations. Further, if a new base station is added in an area where other base stations are already placed, the task is to distribute or redistribute the restrictions.

As stated above, a state-of-the-art approach for inter-cell interference coordination in communication networks using orthogonal transmission schemes is based on selectively reducing the power of certain frequency subsets in cells with a coordination between cells in the neighbourhood. Similarly the so-called cell-pilot pattern does also need to be coordinated between neighbouring cells.

In the patent EP 1784031 Bl a so-called gain matrix is introduced which is based on the interference relation between all cells or sectors. Based on the gain matrix, the overall data throughput can be maximized by choosing the optimum frequency subsets for power restriction in each cell or sector. However, said gain matrix is obtained by mobile measurements which implies high computational efforts.

In the international patent application WO 02/091774 A, a method is disclosed for allocating frequencies to base stations in a mobile telephone network, and especially for automatically resetting frequencies already allocated in the case of non saturated base stations and re-allocating frequencies to said base stations. Firstly, frequencies are allocated to base stations using any known prior art method. In the case where a non-saturated base station is present, a complete frequency plan is obtained. However, if some base stations are not saturated, the inventive method is carried out: the current frequency allocation is reset and a new frequency allocation is carried out automatically. A parameter, the resetting extent parameter, is used to determine to which extent the resetting method is implemented.

The problem to be solved is related to the well known mathematical problem of colouring a graph in the field of graph theory. In the problem that is solved by the invention, a colour corresponds to e.g. a certain frequency of a cell or a pilot frequency of a cell or a power restriction on a certain frequency subset, or generally speaking to a certain resource.

However, in the field of graph theory, only complete solutions are searched and only simple problem statement assumptions are used. The known mathematical colouring method does not handle the situations of real network scenarios, as e.g. interferences to more than only nearest neighbours, and to allow suboptimal colour configurations in the case that no perfect free solution is possible.

There are well known mathematical algorithms for the pure mathematical colouring problem. Algorithms which find an optimal solution, as e.g. the so-called brute force and backtracking types, have all a computation effort which increases exponentially with the number of cells. Thus it cannot be applied for commercial networks, i.e. areas with a large number of cells. Simple cell by cell colour assignment algorithms, i.e. the so-called greedy types, reach an arbitrary result from which its quality cannot be predicted.

The object of the invention is thus to propose a method for realizing inter-cell coordination tasks, like e.g. the above described inter-cell interference coordination, in a self organizing way and to self-optimize the system performance with low computational effort and appropriate quality.

This object is achieved by a method according to the teaching of claim 1, a central device according to the teaching of claim 11 and a communication network according to the teaching of claim 13.

The main idea of the invention is that first, a central device in a communication network assigns resources to cells or sectors in such a way, that if possible the resources of neighboring cells or sectors are different, and then, in a restricted area comprising cells or sectors for which no resources could have been assigned yet, or the same resources as in neighboring cells or sectors have been assigned, the central device reassigns the resources in such a way, that the resources of neighboring cells or sectors are different.

If in said restricted area the resources can not be reassigned in such a way, that the resources of neighboring cells or sectors are different, the resources are reassigned in such a way, that the resources of neighboring cells or sectors in the center of said restricted area are different, and that the same resources are assigned to neighboring cells or sectors at the border of the restricted area, and said neighboring cells or sectors at the border of the restricted area are the center of another restricted area in which the resources are reassigned in such a way, that the resources of neighboring cells or sectors are different.

Further developments of the invention can be gathered from the dependent claims and the following description.

In the following the invention will be explained further making reference to the attached drawings.
Fig. 1 schematically shows a cellular communication network in which the invention can be implemented.
Fig. 2 schematically shows the partitioning of an OFDM or single carrier FDMA frequency band in disjunctive frequency subsets and the power limitation of a restricted frequency subset.
Fig. 3 schematically shows a hexagonal cell pattern with indication of dedicated frequency subsets that are used with restricted power in dedicated regions of the cells.
Fig. 4 schematically shows a first part of the method for distribution of resources to cells or sectors according to an embodiment of the invention.
Fig. 5 schematically shows a second part of the method for distribution of resources to cells or sectors according to an embodiment of the invention.
Fig. 6 schematically shows an irregular cellular network with an indication of the resources that have been assigned to the cells according to the invention.
Fig. 7 schematically shows a hexagonal cellular network with an indication of the resources that have been assigned and reassigned to the cells according to the invention.

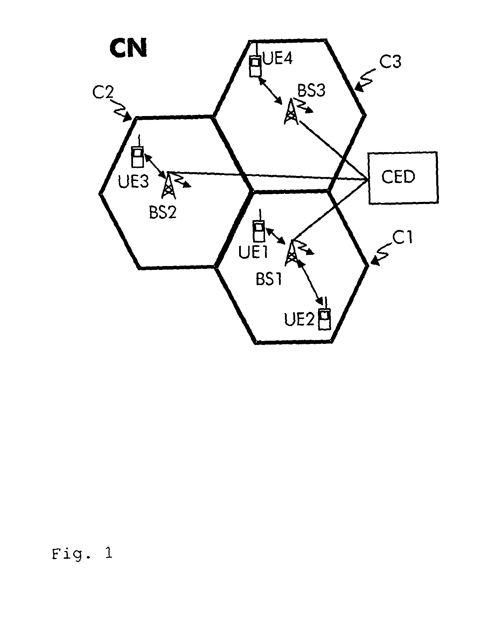

A communication network in which the invention can be implemented is depicted in fig. 1 and comprises user terminals UE1-UE4, base stations BS1-BS3, and a central device CED.

Each of said user terminals UE1-UE4 is connected to one or multiple of said base stations BS1-BS3, and the base stations are in turn connected to a core network which is not shown in fig. 1 for the sake of simplicity. Each of said base stations is connected to the central device CED.

The user terminals UE1-UE4 comprise the functionality of a user terminal for transmission and reception in a communication network as e.g. an OFDM network, i.e. they can be connected to a communication network by means of a base station.

The base stations BS1-BS3 comprise the functionality of a base station of a communication network as e.g. a WLAN or an OFDM network, i.e. they serve the corresponding cells C1-C3, and provide the possibility for user terminals to get connected to the communication network.

The central device CED according to the invention comprises at least one processing means that is adapted to assign resources to the cells C1-C3 or sectors in such a way, that if possible the resources of neighboring cells or sectors are different, and to assign or to reassign the resources in a restricted area comprising cells or sectors for which no resources could have been assigned yet, or the same resources as in neighboring cells or sectors have been assigned, in such a way, that the resources of neighboring cells or sectors are different.

In the following, by way of example the method according to the invention is described in detail making reference to figs. 1 to 7.

In the following, the word "colour" is used as a synonym for the word "resource" in order to stick to the terminology of the mathematical colouring problem used in 3GPP LTE inter-cell interference coordination. A certain colour that is assigned to a cell means e.g. that a certain part of the frequency spectrum, i.e. one or more dedicated frequency subsets have a reduced power compared to the remaining part of the frequency spectrum in order to support inter-cell interference coordination (ICIC). Different cell-colours mark that different parts of the frequency bands, i.e. frequency subsets, are used with reduced power in the cells. While the above notation relates directly to 3GPP LTE inter-cell interference coordination, it can equally be used for other task of cell planning, e.g. that a colour of a cell relates to the pilot patterns or in GSM (GSM = Global System for Mobile Communication) to the cell frequency. In order to cover all those cases, the algorithm described in the following uses the generic term "colour" of a cell in order to cover all possible applications.

In the method according to the invention, a colour is assigned to each cell or sector in such a way, that neighbouring cells or sectors do not have the same colour.

Neighbouring cells or sectors are e.g. such cells or sectors which have a neighbour relation as listed in the 3GPP neighbour relation table (NRT). In particular, neighbouring cells or sectors may also be such cells or sectors which are neighbours of a neighbour, i.e. neighbours of 2^{nd} order, or generally neighbours of nth order.

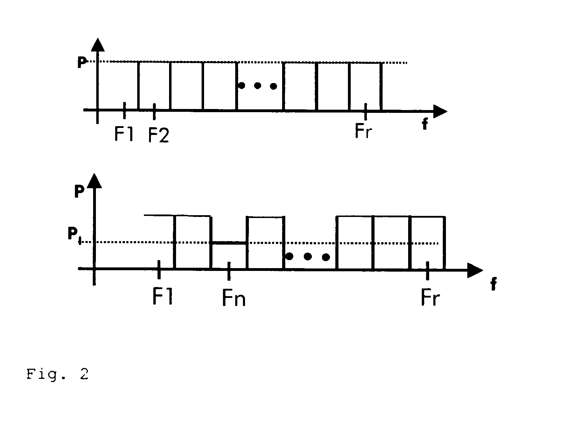

Fig. 2 shows in the upper part a number of r disjoint frequency subsets F1 F2...Fr along the frequency axis f. All these frequency subsets can have the same maximum power value along the power axis p, i.e. all frequency subsets are used with the same maximum power. These frequency subsets may contain frequency diverse frequency patterns to be robust against a frequency selective fading channel. For simplicity they are depicted as blocks over the frequency axis f as given in fig. 2.

In a general case the frequency subsets do not need to be disjoint albeit this makes the task more complex.

A cell or sector specific power planning is possible for the frequency subsets. For example, for the downlink depending on the dedicated cell a dedicated frequency subset can only be used with a reduced power, i.e. a resource restriction, in the cell.

This power restriction is illustrated in the lower part of fig. 2. Here, it can be seen that the restricted frequency subset Fn can only be used maximally with the limited power pl.

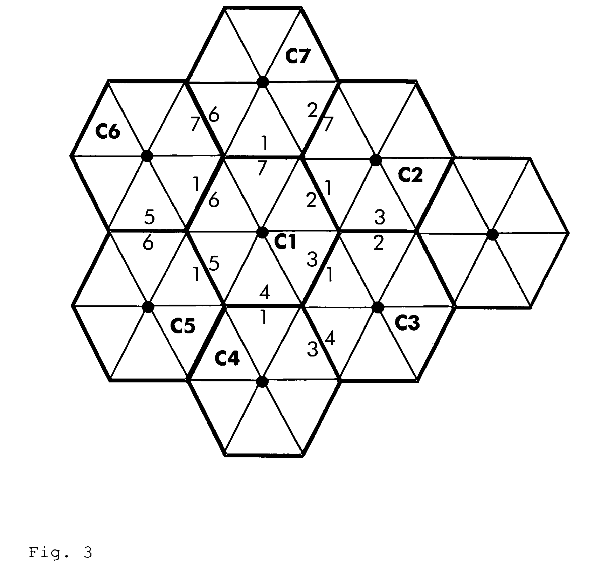

In fig. 3, interference power planning is illustrated for omni-directional antennas and hexagonal, sectorized cells for the case of r=7, i.e. 7 frequency subsets.

The hexagonal cells are denoted Cn, and the dot in the middle of each cell represents a base station. The number n indicates the power restricted frequency subset Fn of the respective cell Cn, and the frequency subsets Fk that are used in the border regions of the cells are denoted with numbers k. In the inner area of the cells, all frequency subsets are used for uplink. The respective power restricted frequency subset Fn is only used with limited power according to fig. 1 in downlink. In downlink e.g. interference coordination works in such a way that the power restriction of a frequency subset in a neighboring cell turns into a preference for the usage of said frequency subset for the user terminals served by the original cell and approaching the neighbor cell.

So the goal of the distribution of resources or resource restrictions is that neighboring cells have different resources or resource restrictions and the corresponding possible preferences for user terminals in the border region possibly leaving the cell are distributed across different parts of the border region so that as much as possible of the spectrum can be used in the whole border region and the data throughput is thus maximized.

By choosing e.g. r=7, it is achieved that a cell is surrounded by neighbors with a different cell number n, i.e. with a different power restricted frequency subset Fn.

The method according to the invention comprises two major steps to assign particular colours to cells or sectors:
1) Firstly, a fast and simple assignment procedure is carried out for the complete area with all cells. Thereby those cells are not yet assigned a colour where the simple colour assignment is not possible within said first simple assignment procedure.
2) Secondly, local area colour re-assignment or colour optimization procedures are performed in all those local areas around those cells to which no colour could be assigned in the first simple assignment step and in those areas where colour assignment conflicts occur. There may, if necessary, be several steps to resolve all colour assignment problems.

The method according to the invention is described as a centralized algorithm, which runs in a central device CED, as e.g. in the operation and maintenance centre of the network operator, or simply in a computer, as e.g. a personal computer. Said central device CED has the knowledge of the cell or sector colour settings and about the neighbour relations between cells or sectors comprised e.g. in the so-called neighbour relation table, can assign or re-assign a colour to a cell or sector and can trigger the colour finding or deciding steps. However, the algorithm itself is independent from where, i.e. in which network entity, it is being run as long as for the algorithm the necessary information is present, and the necessary information exchange and trigger capabilities are available.

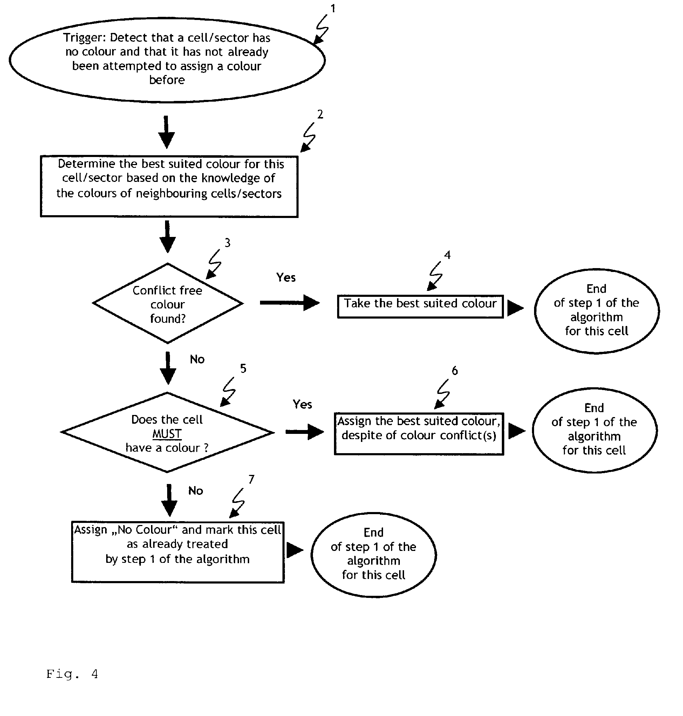

The flow chart in fig. 4 describes the steps of the first part of the method according to the invention. Said first part comprises the fast and simple colour assignment for all cells, if said assignment is possible.

In the flow chart in fig. 4, the different steps are indicated with numbers.

In the first step 1, it is detected for a cell or a sector whether it has been attempted already to assign a colour to said cell or sector. If it has not been attempted before to assign a colour, then the second step 2 is triggered. For all cells or sectors, it is e.g. successively, i.e. one after the other, attempted to assign a colour. Once a colour has been assigned to a cell or sector, this decision is not altered anymore during the first part of the method according to the invention.

In the second step 2, the best suited colour for said cell or sector is determined based on the knowledge of the colours of neighbouring cells or sectors.

The colour for the cell or sector is determined in such a way that no neighbour cell or sector, e.g. according to the neighbour relation table, has already the same colour.

If more than one colour is possible for the cell or sector, then a colour is chosen in such a way that the distance between cells or sectors with the same colour is as great as possible. The distance between cells or sectors with the same colour can be estimated by the number of direct neighbour cells or sectors between them e.g. according to a neighbour relation table which indicates e.g. the neighbour of a neighbour.

The motivation behind this attempt is to use all available colours and try to assign them roughly uniformly distributed over the whole communication network area.

For this algorithm, it is sufficient to consider only the knowledge about neighbours which is e.g. present in the neighbour relation table.

In an embodiment of the invention, optionally interference relations between cells or sectors are also considered, if information about said interference relations are available between certain cells or sectors. In other words, the distance between two cells or sectors is weighted with the interference between them, i.e. the stronger the interference is, the smaller the weighted distance is.

In another embodiment of the invention, if further information, e.g. about the geographical position of the base station or the maximum base station transmission power, are available, said information are optionally considered and the distance between two cells or sectors is weighted based on said further information which also results in a weighted distance. E.g., the higher the maximum base station transmission power is, the smaller the weighted distance is.

In a further embodiment of the invention, the central device CED determines the resources to the cells C1-C3 or the sectors in such a way, that direct neighbors of a cell or a sector have as many different colors, i.e. resources, assigned as possible. Thus, the resources in the cells C1-C3 or the sectors can be better exploited.

In the third step 3, it is checked whether or not a colour has been found which can be assigned to the cell or sector so that no neighbour cell or sector has the same colour.

In the fourth step 4, if more than one colour has been found which can be assigned to the cell or sector, then that colour is assigned to the cell or sector which results in the greatest distance between the cell or sector and the closest cell or sector with the same colour.

In the fifth step 5, in the case that for the cell or sector no colour within the pool of allowed colours has been found which is not yet used by a neighbour cell or sector, it is checked whether or not a colour must be assigned to the cell or sector.

In the sixth step 6, if the cell or sector must have a colour, as e.g. a cell must have a pilot frequency, and no conflict free colour is available, then that colour with the least conflicts, i.e. the least number of neighbour cells or sectors with the same colour, or the largest distance to the neighbour cell or sector with the same colour, is chosen. Thereby a colour conflict has to be accepted, however, the conflict will thereafter be detected and resolved in the second part of the method according to the invention.

In the seventh step 7, if the cell or sector does not need to have a colour at the end of the first part of the method, then no colour is assigned to said cell or sector. The cell or sector is marked as already attempted to assign a colour. This assignment problem will tried to be resolved in the second part of the method according to the invention.

The order in which the assignment of colours to the cells or sectors is performed influences the achieved colouring. For the order in which the cells or sectors are assigned colours, their number of direct neighbour cells or sectors can be considered, e.g. starting with the cell or sector with the highest number of neighbour cells or sectors and ending with the cell or sector with the lowest number of neighbour cells or sectors or vice versa. In another embodiment, the assignment of colours starts from certain cells or sectors and continues assigning direct neighbours starting from there, i.e. the assignment of colours is similar to a crystallization process. However, the whole algorithm works independent of the order of assignment of colours to the cells or sectors in the first part of the method according to the invention.

The first part of the method according to the invention as described above is very fast and can be carried out also for very large areas with a lot of cells or sectors. While it will manage to colour many cells or sectors, no quality guarantee can be given about the quality of the solution. Quality refers here to how many colours the algorithm uses or, in this case, how many cells or sectors are left out because no colour could be assigned. All such possible problems will be resolved in the second part of the method according to the invention which will be described in the following.

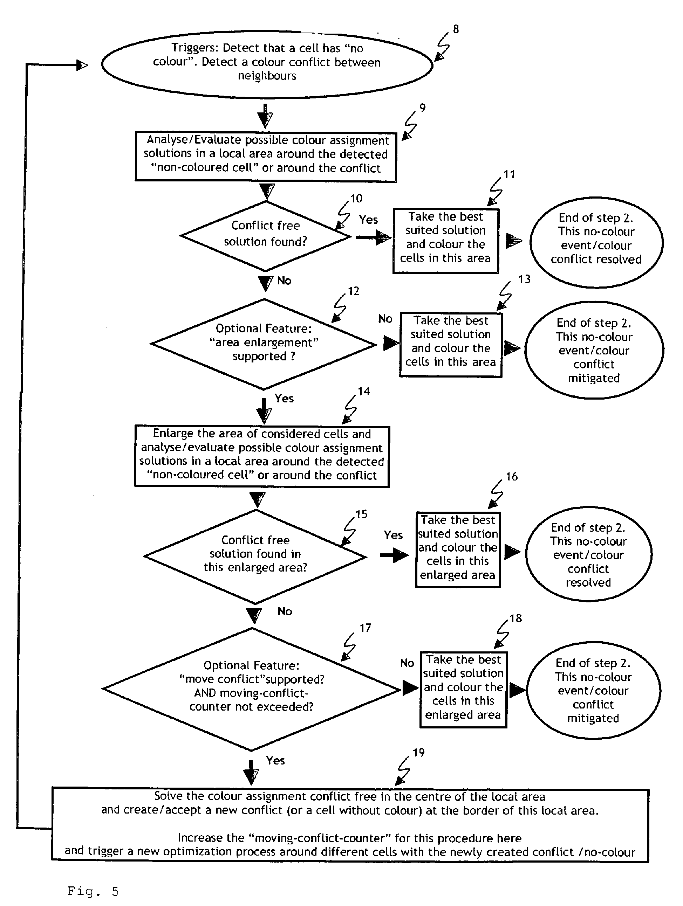

The flow chart in fig. 5 describes the steps of the second part of the method according to the invention. Said second part comprises a local area colour optimization and colour reassignment. As the second part of the method follows the first part of the method described above, in the flow chart in fig. 5, the different steps are indicated with numbers beginning with number 8.

In the eighth step 8, it is detected for a cell or a sector whether it has no colour assigned, or whether it has a colour conflict, i.e. whether the cell or sector has a neighbouring cell or sector with the same colour. If no colour is assigned or if there is a colour conflict, then a colour assignment or reassignment procedure according to step 9 is triggered.

In the ninth step 9, in a local area comprising a small number of cells or sectors around a cell or sector without assigned colour or with a colour conflict, in order to resolve the colour assignment problem, a colour assignment or reassignment procedure is performed. For all cells or sectors without assigned colour or with a colour conflict, it is attempted to resolve the colour assignment problem.

As only a small number of cells or sectors in the respective local area are involved in the colour assignment or reassignment procedure, this ninth step 9 procedure can try to determine an optimal solution in said local area. For example all possible cell-colour or sector-colour combinations in the local area can be analysed by so-called brute force or back tracking algorithms. An intended colouring solution has ideally the following properties:
- no neighbouring cells or sectors have the same colour and all cells or sectors have a colour. This condition includes that there are no colour conflicts to the direct neighbour cells or sectors around the local area either.
- if there is more than one solution which fulfils the above condition of no neighbour colour conflicts, then the best suited local cell or sector colouring solution is selected, which e.g. minimizes the overall interference by assigning different colours for direct and farther neighbours, or minimizes the number of required colour changes according to weighting parameters.

In the tenth step 10, it is checked whether or not a cell or sector colouring solution in the local area has been found which can be applied so that no neighbour cell or sector has the same colour.

In the eleventh step 11, if a cell or sector colouring solution in the local area has been found, it is assigned to the cells and sectors in the local area. If more than one cell or sector colouring solution in the local area has been found which can be assigned to the cells or sectors, then said best suited local cell or sector colouring solution is selected.

In the twelfth step 12, in the case that a cell or sector colouring solution in the local area which leads to no colour conflict can not be found, then it is checked whether or not more cells or sectors around the cell or sector without assigned colour or with a colour conflict can be considered for the colour assignment or reassignment procedure, i.e. it is checked whether the local area can be enlarged.

In the thirteenth step 13, if the local area can not be enlarged, then the best suited local cell or sector colouring solution is selected which minimizes the overall interference based on weighted distances between cells or sectors, or which is a tradeoff between the overall interference, which should be as small as possible, and the number of required colour changes of the cells or sectors, which should also be as small as possible.

In the fourteenth step 14, if the local area can be enlarged, in the enlarged local area, in order to resolve the colour assignment problem, a colour assignment or reassignment procedure is performed. For all cells or sectors without assigned colour or with a colour conflict, it is attempted to resolve the colour assignment problem.

In the fifteenth step 15, it is checked whether or not a cell or sector colouring solution in the enlarged local area has been found which can be applied so that no neighbour cell or sector has the same colour.

In the sixteenth step 16, if a cell or sector colouring solution in the enlarged local area has been found, it is assigned to the cells or sectors in the enlarged local area. If there is more than one solution which fulfils the above condition of no neighbour colour conflicts in the enlarged local area, then the best suited local cell or sector colouring solution is selected, which e.g. minimizes the overall interference or minimizes the number of required colour changes according to weighting parameters.

In the seventeenth step 17, in the case that a cell or sector colouring solution in the enlarged local area which leads to no colour conflict can not be found, then it is checked whether or not it may be considered to solve the colouring problem in the center of the enlarged local area and to create a new colouring conflict at the border of the enlarged local area, i.e. to move the colour conflict. Then a new colour optimization procedure needs to be started around the new colouring conflict. This effectively moves the non-coloured cell or sector or the cell or sector with a colouring conflict through the network. A counter counting the moving steps of the non-coloured cell or sector or the cell or sector with a colouring conflict needs to be used to stop this moving of the colour conflict after e.g. one or two steps, in order to stop this process quickly.

In the eighteenth step 18, if the feature to move the colour conflict is not supported or the counter is exceeded, then the best suited local cell or sector colouring solution is selected which minimizes the overall interference based on weighted distances between cells or sectors, or which is a tradeoff between the overall interference, which should be as small as possible, and the number of required colour changes of the cells or sectors, which should also be as small as possible.

In the nineteenth step 19, if the feature to move the colour conflict is supported and the counter is not exceeded, then the colouring problem in the center of the enlarged local area is solved by moving the colour conflict to the border of the enlarged local area and a new colouring conflict is created at the border of the enlarged local area. Then a new colour optimization procedure is started around the new colouring conflict and step 8 is triggered again.

In the embodiment described above, the features to enlarge the local area and to move the colour conflict are only optional and thus not essential for the method according to the invention. Furthermore, said features can be applied independently from each other separately or in combination.

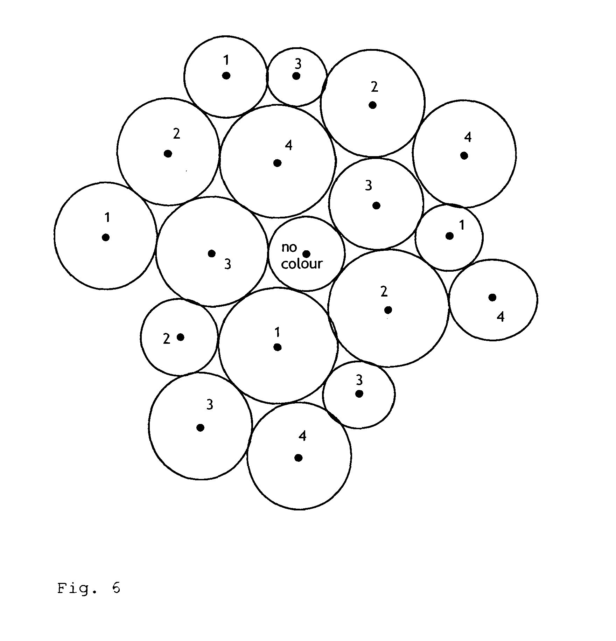

In fig. 6, as an example for the assignment of colours to cells, an irregular cellular network is depicted. The cells are indicated by circles and the base stations are indicated by dots. The colour, i.e. the resource, that is assigned to the respective cell is indicated by a number. There are four different colours that can be assigned to the cells.

In the middle of the network, there is one cell to which no colour could be assigned, as all four colours are already assigned to one of the neighbour cells. Either no colour could have been assigned to the cell in an assignment procedure according to the first part of the method according to the invention as described above, or the cell has been newly added to the network.

The method according to the invention as described above can be used to try to solve the colour conflict.

In the following, an example for solving a colour conflict is described for the case of a hexagonal cellular network.

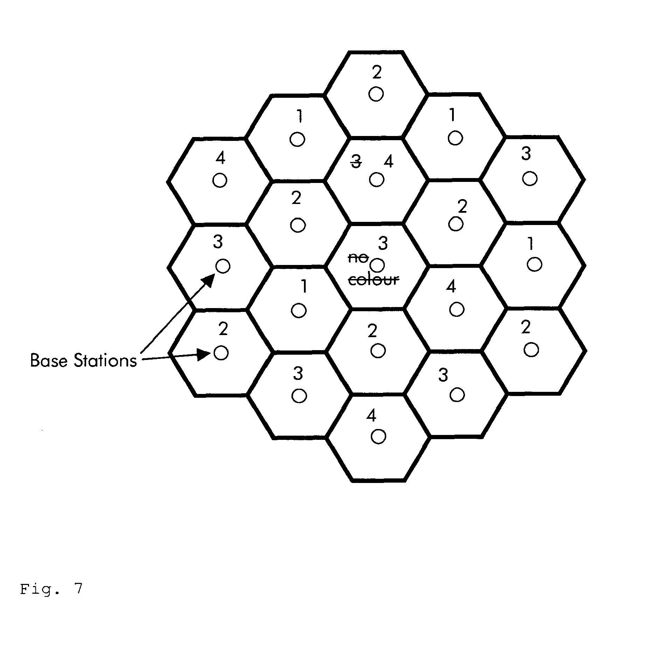

In fig. 7 as an example for the assignment of colours to cells, a local area of a hexagonal cellular network according to the invention is depicted. The cells are indicated by hexagons, and the base stations are indicated by circles. The colour, i.e. the resource, that is assigned to the respective cell is indicated by a number. There are four different colours that can be assigned to the cells.

In the middle of the local area, there is one cell to which at the beginning no colour could be assigned, as all four colours are already assigned to one of the neighbour cells.

After the colour conflict has been detected, the local area as depicted in fig. 7 is defined, and it is tried to solve the colour conflict in the local area by analysing different cell-colour combinations until a solution has been found, or all cell-colour combinations are analysed, and the best suited colouring solution is chosen.

At the beginning, to the cell in the middle of the local area, no colour could have been assigned, which is indicated by the crossed-out words "no colour", and to the cell right above said cell without a colour, the colour 3 has been assigned, which is indicated by a crossed-out 3. After a reassignment procedure according to the invention, the assignment in the cell right above the cell without a colour is changed from colour 3 to colour 4, and thus, to the cell without a colour now the colour 3 can be assigned, and the colour conflict in the local area is solved.

It is not guaranteed, that all conflicts can be resolved within the given maximum number of colours and within the given neighbour relations in a certain area. For example, when there are too many neighbour relations for too few different colours, then it is not possible to assign a colour to every cell. Then it has to be accepted, that the system cannot use e.g. the inter-cell interference coordination approach according to the invention in those not coloured cells, but the system can still profit from the performance gain in the majority of other cells which could be coloured.

In any case, the invention is able to achieve a very good cell or sector colouring solution based on the given constraints, as e.g. number of different colours or neighbour relations.

The method according to the invention is applicable to several different colouring problems, like e.g. interference coordination, and pilot frequency pattern assignment. The weighting of algorithm parameters can differ and the metric, with which a particular colour-assignment scenario is evaluated, depend on the particular problem. For example, for pilot frequencies, the algorithm tries, as far as possible, to minimize the number of colour changes in a running system, as mobiles get dropped, while for interference coordination, it is no problem to alter the selected frequency pattern.

Similarly to pilot frequency pattern and inter-cell interference coordination, this invention can also be used to support operation and maintenance (O&M) in its cellular network planning for networks with a frequency reuse not equal to 1.

The above method according to the invention with both parts is described for the case of an initial cell colouring. In addition, this method can also be used to adapt the system to changes, and to optimize a running system. Whenever a problem or a significant change in the system is detected, like a new, i.e. not yet coloured, cell or like changed, new, or conflicting neighbour relations, e.g. a conflict that two neighbouring cells have the same colour, then the second part of the method, i.e. the local area optimization and colour re-assignment, is carried out around the detected cells where a new situation or a conflict occurred.

In particular this is exactly the case which occurs in 3GPP LTE in the so-called "Add New Cell Self Organizing Network Use Case" in which a new not coloured cell appears and new neighbour relations around that new cell occur, and in the so-called "Remove Existing Cell Self Organizing Network Use Case" in which new neighbour relations can occur between remaining cells in that area.

The performance of a running system can also be optimized, or it can be checked whether the optimal configuration is reached, by running locally the second part of the method according to the invention, i.e. the colour optimization procedure.

## Claims

1. A method for distribution of resources from a pool of resources to cells (C1, C2,...) or sectors of a communication network (CN), wherein
• first, a central device (CED) in the communication network (CN) assigns resources to the cells (C1, C2,...) or the sectors in such a way, that if possible the resources of neighboring cells or sectors are different,
• and then, in a restricted area comprising cells or sectors for which no resources could have been assigned yet, or the same resources as in neighboring cells or sectors have been assigned, the central device (CED) reassigns the resources in such a way, that the resources of neighboring cells or sectors are different,
**characterized in**
• **that** if in said restricted area the resources can not be reassigned in such a way, that the resources of neighboring cells or sectors are different, the resources are reassigned in such a way, that the resources of neighboring cells or sectors in the center of said restricted area are different, and that the same resources are assigned to neighboring cells or sectors at the border of the restricted area,
• and **that** said neighboring cells or sectors at the border of the restricted area are the center of another restricted area in which the resources are reassigned in such a way, that the resources of neighboring cells or sectors are different.

2. A method according to claim 1, **characterized in that** said communication network (CN) uses a frequency band that is divided into at least two frequency subsets (F1 F2...FR) , and said resources differ in the used power level of said at least two frequency subsets (F1, F2...FR) .

3. A method according to claim 1, **characterized in that** said communication network (CN) uses a frequency band that is divided into at least two frequency subsets (F1, F2...FR) , and said resources correspond to pilot patterns.

4. A method according to claim 1, **characterized in that** the resources are reassigned in such a way, that the number of changes of assignments of the resources is minimized.

5. A method according to claim 1, **characterized in that** if at least two resources from said pool of resources can be assigned in such a way, that the resources of neighboring cells or sectors are different, the resources are assigned in such a way, that the distance to other cells or sectors with the same resources is as large as possible.

6. A method according to claim 5, **characterized in that** said distance is estimated by the number of direct neighbor cells or sectors between said cells or sectors and said other cells or sectors with the same resources.

7. A method according to claim 1, **characterized in that** if at least two resources from said pool of resources can be assigned in such a way, that the resources of neighboring cells or sectors are different, the resources are assigned in such a way, that the inter-cell interference between said cells or sectors and other cells or sectors with the same resources is minimized.

8. A method according to claim 1, **characterized in that** if in said restricted area the resources can not be reassigned in such a way, that the resources of neighboring cells or sectors are different, said restricted area is increased in steps either till the resources can be reassigned in such a way, that the resources of neighboring cells or sectors are different, or till a predefined maximum number of steps is achieved.

9. A method according to claim 1, **characterized in that** an assignment or a reassignment of resources to the cells or the sectors is triggered by adding a new cell or sector, by removing a cell or sector, by changed neighbour relations between said cells or sectors, or by changed interference situations.

10. A method according to claim 1, **characterized in that** the central device (CED) assigns or reassigns the resources to the cells (C1, C2,...) or the sectors in such a way, that direct neighbors of a cell (C1, C2,...) or a sector have as many different resources assigned as possible.

11. A central device (CED) for distribution of resources from a pool of resources to cells (C1, C2,...) or sectors of a communication network wherein the central device (CED) comprises at least one processing means that is adapted
• to assign resources to the cells (C1, C2,...) or the sectors in such a way, that if possible the resources of neighboring cells or sectors are different,
• and to assign or to reassign the resources in a restricted area comprising cells or sectors for which no resources could have been assigned yet, or the same resources as in neighboring cells or sectors have been assigned, in such a way, that the resources of neighboring cells or sectors are different,
**characterized in that** the at least one processing means is adapted
• to reassign the resources in such a way, that the resources of neighboring cells or sectors in the center of said restricted area are different, and to assign the same resources to neighboring cells or sectors at the border of the restricted area, if in said restricted area the resources can not be reassigned in such a way, that the resources of neighboring cells or sectors are different,
• and to reassign the resources in another restricted area, with said neighboring cells or sectors at the border of the restricted area being the center of the other restricted area, in such a way, that the resources of neighboring cells or sectors are different.

12. A central device (CED) according to claim 11, **characterized in that** the central device (CED) is an operation and maintenance center.

13. A communication network (CN) comprising base stations (BS1-BS3), user terminals (UE1-UE4), and at least one central device (CED) for distribution of resources from a pool of resources to cells (C1, C2,...) or sectors of the communication network (CN) wherein the central device (CED) comprises at least one processing means that is adapted
• to assign resources to the cells (C1, C2,...) or the sectors in such a way, that if possible the resources of neighboring cells or sectors are different,
• and to reassign the resources in a restricted area comprising cells or sectors for which no resources could have been assigned yet, or the same resources as in neighboring cells or sectors have been assigned, in such a way, that the resources of neighboring cells or sectors are different,
**characterized in that** the at least one processing means is adapted
• to reassign the resources in such a way, that the resources of neighboring cells or sectors in the center of said restricted area are different, and to assign the same resources to neighboring cells or sectors at the border of the restricted area, if in said restricted area the resources can not be reassigned in such a way, that the resources of neighboring cells or sectors are different,
• and to reassign the resources in another restricted area, with said neighboring cells or sectors at the border of the restricted area being the center of the other restricted area, in such a way, that the resources of neighboring cells or sectors are different.

## Patentansprüche

1. Ein Verfahren zur Verteilung von Ressourcen aus einer Ressourcensammlung an Zellen (C1, C2,...) oder Abschnitte eines Kommunikationsnetzwerks (CN), wobei
• zuerst eine zentrale Vorrichtung (CED) im Kommunikationsnetzwerk (CN) Ressourcen derart an die Zellen (C1, C2,...) oder an die Abschnitte zuweist, dass, soweit möglich, die Ressourcen von benachbarten Zellen oder Abschnitten verschieden sind,
• und anschließend, in einem begrenzten Bereich, welcher Zellen oder Abschnitte umfasst, für welche noch keine Ressourcen zugewiesen werden konnten oder dieselben Ressourcen wie in benachbarten Zellen oder Abschnitten zugewiesen wurden, umfasst, die zentrale Vorrichtung (CED) die Ressourcen derart neu zuweist, dass die Ressourcen von benachbarten Zellen oder Abschnitten verschieden sind,
**dadurch gekennzeichnet,**
• **dass**, wenn die Ressourcen in dem besagten begrenzten Bereich nicht derart neu zugewiesen werden können, dass die Ressourcen von benachbarten Zellen oder Abschnitten verschieden sind, die Ressourcen derart neu zugewiesen werden, dass die Ressourcen von benachbarten Zellen oder Abschnitten in der Mitte des besagten begrenzten Bereichs verschieden sind, und dass dieselben Ressourcen am Rand des begrenzten Bereichs an benachbarte Zellen oder Abschnitten zugewiesen werden,
• und **dass** die besagten benachbarten Zellen oder Abschnitte am Rand des begrenzten Bereichs die Mitte eines anderen begrenzten Bereichs sind, in welchem die Ressourcen derart neu zugewiesen werden, dass die Ressourcen von benachbarten Zellen oder Abschnitten verschieden sind.

2. Ein Verfahren nach Anspruch 1, **dadurch gekennzeichnet, dass** das besagte Kommunikationsnetzwerk (CN) in Frequenzband verwendet, welches in mindestens zwei Frequenzteilmengen (F1, F2...FR) aufgeteilt ist, und dass sich die besagten Ressourcen in dem verwendeten Leistungspegel der besagten mindestens zwei Frequenzteilmengen (F1, F2...FR) unterscheiden.

3. Ein Verfahren nach Anspruch 1, **dadurch gekennzeichnet, dass** das besagte Kommunikationsnetzwerk (CN) ein Frequenzband verwendet, welches in mindestens zwei Frequenzteilmengen (F1, F2...FR) aufgeteilt ist, und dass die besagten Ressourcen Pilotmustern entsprechen.

4. Ein Verfahren nach Anspruch 1, **dadurch gekennzeichnet, dass** die Ressourcen derart neu zugewiesen werden, dass die Anzahl der Zuweisungsänderungen der Ressourcen auf ein Minimum beschränkt wird.

5. Ein Verfahren nach Anspruch 1, **dadurch gekennzeichnet, dass**, wenn mindestens zwei Ressourcen aus der besagten Ressourcensammlung derart zugewiesen werden können, dass die Ressourcen von benachbarten Zellen oder Abschnitten verschieden sind, die Ressourcen derart zugewiesen werden, dass der Abstand zu anderen Zellen oder Abschnitten mit denselben Ressourcen so groß wie möglich ist.

6. Ein Verfahren nach Anspruch 5, **dadurch gekennzeichnet, dass** der Abstand anhand der Anzahl von direkten Nachbarzellen oder -abschnitten zwischen den besagten Zellen oder Abschnitten und den besagten anderen Zellen oder Abschnitten mit denselben Ressourcen abgeschätzt wird.

7. Ein Verfahren nach Anspruch 1, **dadurch gekennzeichnet, dass**, wenn mindestens zwei Ressourcen aus der besagten Ressourcensammlung derart zugewiesen werden können, dass die Ressourcen von benachbarten Zellen oder Abschnitten verschieden sind, die Ressourcen derart zugewiesen werden, dass die Interferenz zwischen den besagten Zellen oder Abschnitten und anderen Zellen oder Abschnitten mit denselben Ressourcen auf ein Minimum beschränkt wird.

8. Ein Verfahren nach Anspruch 1, **dadurch gekennzeichnet, dass**, wenn in dem besagten begrenzten Bereich die Ressourcen nicht derart neu zugewiesen werden können, dass die Ressourcen von benachbarten Zellen oder Abschnitten verschieden sind, der besagte begrenzte Bereich schrittweise vergrößert wird, bis entweder die Ressourcen derart neu zugewiesen werden können, dass die Ressourcen von benachbarten Zellen oder Abschnitten verschieden sind, oder eine vorgegebene maximale Anzahl von Schritten erreicht ist.

9. Ein Verfahren nach Anspruch 1, **dadurch gekennzeichnet, dass** eine Zuweisung oder eine Neuzuweisung von Ressourcen an die Zellen oder die Abschnitte durch Hinzufügen einer neuen Zelle oder eines neuen Abschnitts, durch Entfernen einer Zelle oder eines Abschnitts, durch veränderte nachbarschaftliche Beziehungen zwischen den besagten Zellen oder Abschnitten oder durch veränderte Interferenzsituationen getriggert wird.

10. Ein Verfahren nach Anspruch 1, **dadurch gekennzeichnet, dass** die zentrale Vorrichtung (CED) den Zellen (C1, C2,...) oder den Abschnitten derart Ressourcen zuweist oder neu zuweist, dass direkte Nachbarn einer Zelle (C1, C2,...) oder eines Abschnitts so viele verschiedene Ressourcen wie möglich zugewiesen bekommen.

11. Eine zentrale Vorrichtung (CED) zur Verteilung von Ressourcen aus einer Ressourcensammlung an Zellen (C1, C2,...) oder Abschnitte eines Kommunikationsnetzwerks, wobei die zentrale Vorrichtung (CED) mindestens ein Verarbeitungsmittel umfasst, welches dazu ausgelegt ist,
• Ressourcen derart an die Zellen (C1, C2,...) oder an die Abschnitte zuzuweisen, dass, soweit möglich, die Ressourcen von benachbarten Zellen oder Abschnitten verschieden sind,
• und die Ressourcen in einem begrenzten Bereich, welcher Zellen oder Abschnitte umfasst, für die noch keine Ressourcen zugewiesen werden konnten oder dieselben Ressourcen wie in benachbarten Zellen oder Abschnitten zugewiesen wurden, derart zuzuweisen oder neu zuzuweisen, dass die Ressourcen von benachbarten Zellen oder Abschnitten verschieden sind,
**dadurch gekennzeichnet, dass** das mindestens ein Verarbeitungsmittel dazu ausgelegt ist,
• die Ressourcen derart neu zuzuweisen, dass die Ressourcen von benachbarten Zellen oder Abschnitten in der Mitte des besagten begrenzten Bereichs verschieden sind, und dieselben Ressourcen an benachbarte Zellen oder Abschnitte am Rand des begrenzten Bereichs zuzuweisen, wenn die Ressourcen in dem besagten begrenzten Bereich nicht derart neu zugewiesen werden können, dass die Ressourcen von benachbarten Zellen oder Abschnitten verschieden sind,
• und die Ressourcen in einem anderen begrenzten Bereich neu zuzuweisen, wobei die besagten benachbarten Zellen oder Abschnitte am Rand des begrenzten Bereichs die Mitte des anderen begrenzten Bereichs sind, und zwar derart, dass die Ressourcen von benachbarten Zellen oder Abschnitten verschieden sind.

12. Eine zentrale Vorrichtung (CED) nach Anspruch 11, **dadurch gekennzeichnet, dass** die zentrale Vorrichtung (CED) eine Betriebs- und Wartungszentrale ist.

13. Ein Kommunikationsnetzwerk (CN) mit Basisstationen (BS1-BS3), Benutzerendgeräten (UE1-UE4) und mindestens einer zentralen Vorrichtung (CED) zur Verteilung von Ressourcen aus einer Ressourcensammlung an Zellen (C1, C2,...) oder Abschnitte des Kommunikationsnetzwerks (CN), wobei die zentrale Vorrichtung (CED) mindestens ein Verarbeitungsmittel umfasst, welches dazu ausgelegt ist,
• Ressourcen derart an die Zellen (C1, C2,...) oder die Abschnitte zuzuweisen, dass, soweit möglich, die Ressourcen von benachbarten Zellen oder Abschnitten verschieden sind,
• und die Ressourcen in einem begrenzten Bereich, welcher Zellen oder Abschnitte umfasst, für welche noch keine Ressourcen zugewiesen werden konnten oder dieselben Ressourcen wie in benachbarten Zellen oder Abschnitten zugewiesen wurden, derart neu zuzuweisen, dass die Ressourcen von benachbarten Zellen oder Abschnitten verschieden sind,
**dadurch gekennzeichnet, dass** das mindestens ein Verarbeitungsmittel dazu ausgelegt ist,
• die Ressourcen derart neu zuzuweisen, dass die Ressourcen von benachbarten Zellen oder Abschnitten in der Mitte des besagten begrenzten Bereichs verschieden sind, und dieselben Ressourcen an benachbarte Zellen oder Abschnitte am Rand des begrenzten Bereichs zuzuweisen, wenn die Ressourcen in dem besagten begrenzten Bereich nicht derart neu zugewiesen werden können, dass die Ressourcen von benachbarten Zellen oder Abschnitten verschieden sind,
• und die Ressourcen in einem anderen begrenzten Bereich neu zuzuweisen, wobei die besagten benachbarten Zellen oder Abschnitte am Rand des begrenzten Bereichs die Mitte des anderen begrenzten Bereichs sind, und zwar derart, dass die Ressourcen von benachbarten Zellen oder Abschnitten verschieden sind.

## Revendications

1. Procédé de distribution de ressources d'un ensemble de ressources vers des cellules (C1, C2,...) ou des secteurs d'un réseau de communication (CN), dans lequel
• tout d'abord, un dispositif central (CED) dans le réseau de communication (CN) assigne des ressources aux cellules (C1, C2,...) ou aux secteurs de sorte que, si possible, les ressources de cellules ou de secteurs voisins soient différentes,
• puis, dans une zone restreinte comprenant des cellules ou des secteurs auxquels aucune ressource n'a pu être encore assignée, ou les mêmes ressources que dans des cellules ou des secteurs voisins ont été assignées, le dispositif central (CED) réassigne les ressources de sorte que les ressources de cellules ou de secteurs voisins soient différentes,
**caractérisé**
• **en ce que**, si dans ladite zone restreinte les ressources ne peuvent pas être réassignées de sorte que les ressources de cellules ou de secteurs voisins soient différentes, les ressources sont réassignées de sorte que les ressources de cellules ou de secteurs voisins au centre de ladite zone restreinte soient différentes, et que les mêmes ressources sont assignées à des cellules ou à des secteurs voisins à la limite de la zone restreinte,
• et **en ce que** lesdits secteurs ou cellules voisins à la limite de la zone restreinte sont le centre d'une autre zone restreinte dans laquelle les ressources sont réassignées de sorte que les ressources de secteurs ou de cellules voisins soient différentes.

2. Procédé selon la revendication 1, **caractérisé en ce que** ledit réseau de communication (CN) utilise une bande de fréquences qui se divise au moins en deux sous-ensembles de fréquences (F1, F2...FR), et lesdites ressources diffèrent du point de vue du niveau de puissance utilisée desdits au moins deux sous-ensembles de fréquences (F1, F2...FR).

3. Procédé selon la revendication 1, **caractérisé en ce que** ledit réseau de communication (CN) utilise une bande de fréquences qui se divise au moins en deux sous-ensembles de fréquences (F1, F2...FR), et lesdites ressources correspondent aux motifs pilotes.

4. Procédé selon la revendication 1, **caractérisé en ce que** les ressources sont réassignées de sorte que le nombre de changements d'assignations des ressources soit réduit au minimum.

5. Procédé selon la revendication 1, **caractérisé en ce que**, si au moins deux ressources dudit ensemble de ressources peuvent être assignées de sorte que les ressources de cellules ou de secteurs voisins soient différentes, les ressources sont assignées de sorte que la distance vers d'autres cellules ou secteurs possédant les mêmes ressources soit la plus importante possible.

6. Procédé selon la revendication 5, **caractérisé en ce que** ladite distance est estimée par le nombre de cellules ou de secteurs voisins directs entre lesdits secteurs ou cellules et lesdits autres secteurs ou cellules possédant les mêmes ressources.

7. Procédé selon la revendication 1, **caractérisé en ce que**, si au moins deux ressources dudit ensemble de ressources peuvent être assignées de sorte que les ressources de cellules ou de secteurs voisins soient différentes, les ressources sont assignées de sorte que l'interférence intercellulaire entre lesdits secteurs ou cellules et d'autres secteurs ou cellules possédant les mêmes ressources soit réduite au minimum.

8. Procédé selon la revendication 1, **caractérisé en ce que**, si dans ladite zone restreinte les ressources ne peuvent pas être réassignées de sorte que les ressources de cellules ou de secteurs voisins soient différentes, ladite zone restreinte est augmentée par étapes jusqu'à ce que les ressources puissent être réassignées de sorte que les ressources de cellules ou de secteurs voisins soient différentes, ou jusqu'à ce qu'un nombre maximum prédéfini d'étapes soit atteint.

9. Procédé selon la revendication 1, **caractérisé en ce qu'**une assignation ou une réassignation de ressources aux cellules ou aux secteurs soit déclenchée en ajoutant une nouvelle cellule ou un nouveau secteur, par retrait d'une cellule ou d'un secteur, par changement des relations de voisinage entre lesdits secteurs ou cellules ou par changement des situations d'interférence.

10. Procédé selon la revendication 1, **caractérisé en ce que** le dispositif central (CED) assigne ou réassigne les ressources aux cellules (C1, C2, ...) ou aux secteurs de sorte que des voisins directs d'une cellule (C1, C2,...) ou d'un secteur possèdent autant de ressources différentes assignées que possible.

11. Dispositif central (CED) de distribution de ressources d'un ensemble de ressources vers des cellules (C1, C2,...) , ou des secteurs d'un réseau de communication dans lequel le dispositif central (CED) comprend au moins un moyen de traitement qui est adapté
• pour assigner des ressources aux cellules (C1, C2,...) ou aux secteurs de sorte que, si possible, les ressources de cellules ou de secteurs voisins soient différentes,
• et pour assigner ou réassigner les ressources dans une zone restreinte comprenant des cellules ou des secteurs auxquels aucune ressource n'a pu être encore assignée, ou les mêmes ressources que dans des cellules ou des secteurs voisins ont été assignées de sorte que les ressources de cellules ou de secteurs voisins soient différentes,
**caractérisé en ce que** l'au moins un moyen de traitement est adapté
• pour réassigner les ressources de sorte que les ressources de cellules ou de secteurs voisins au centre de ladite zone restreinte soient différentes, et pour assigner les mêmes ressources à des cellules ou à des secteurs voisins à la limite de la zone restreinte, si dans ladite zone restreinte les ressources ne peuvent pas être réassignées de sorte que les ressources de cellules ou de secteurs voisins soient différentes,
• et pour réassigner les ressources dans une autre zone restreinte, lesdits secteurs ou cellules voisins à la limite de la zone restreinte étant le centre de l'autre zone restreinte, de sorte que les ressources de cellules ou de secteurs voisins soient différentes.

12. Dispositif central (CED) selon la revendication 11, **caractérisé en ce que** le dispositif central (CED) est un centre d'exploitation et de maintenance.

13. Réseau de communication (CN) comprenant des stations de base (BS1 à BS3), des terminaux utilisateurs (UE1 à UE4), et au moins un dispositif central (CED) de distribution de ressources d'un ensemble de ressources vers des cellules (C1, C2,...) ou des secteurs du réseau de communication (CN) dans lequel le dispositif central (CED) comprend au moins un moyen de traitement qui est adapté
• pour assigner des ressources aux cellules (C1, C2,...) ou aux secteurs de sorte que, si possible, les ressources de cellules ou de secteurs voisins soient différentes,
• et pour réassigner les ressources dans une zone restreinte comprenant des cellules ou des secteurs auxquels aucune ressource n'a pu être encore assignée, ou les mêmes ressources que dans des cellules ou des secteurs voisins ont été assignées de sorte que les ressources de cellules ou de secteurs voisins soient différentes,
**caractérisé en ce que** l'au moins un moyen de traitement est adapté
• pour réassigner les ressources de sorte que les ressources de cellules ou de secteurs voisins au centre de ladite zone restreinte soient différentes, et pour assigner les mêmes ressources à des cellules ou à des secteurs voisins à la limite de la zone restreinte, si dans ladite zone restreinte les ressources ne peuvent pas être réassignées de sorte que les ressources de cellules ou de secteurs voisins soient différentes,
• et pour réassigner les ressources dans une autre zone restreinte, lesdits secteurs ou cellules voisins à la limite de la zone restreinte étant le centre de l'autre zone restreinte, de sorte que les ressources de cellules ou de secteurs voisins soient différentes.
